# EUROPÄISCHE PATENTSCHRIFT

(11) **EP 1 656 245 B1**
(45) Veröffentlichungstag und Bekanntmachung des Hinweises auf die Patenterteilung: **26.12.2007**
(21) Anmeldenummer: 04741245.7
(22) Anmeldetag: 23.07.2004
(51) Int. Cl.: B29C 45/76

(54) **VERFAHREN UND VORRICHTUNG ZUR INTERAKTIVEN STEUERUNG EINER MASCHINE**
METHOD AND DEVICE FOR INTERACTIVE CONTROL OF A MACHINE
PROCEDE ET DISPOSITIF DE COMMANDE INTERACTIVE D'UNE MACHINE

(30) Priorität: 26.07.2003 DE 10334153
(43) Veröffentlichungstag der Anmeldung: 17.05.2006
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2004/008264
(87) Internationale Veröffentlichungsnummer: WO 2005/009719

(56) Entgegenhaltungen:
- WO-A-01/67191
- DE-A- 10 246 925
- DE-U- 9 110 348
- "Selogica - the control unit for all ALLROUNDER injection moulding machines" Mai 2002 (2002-05), ARBURG , XP002305034 Seite 5, Spalte 2, Absatz 1 Seite 8, Spalte 4, Absatz 2; Abbildung 1 Seite 19; Abbildung 1 Seite 22; Abbildung 1
- PATENT ABSTRACTS OF JAPAN Bd. 1995, Nr. 10, 30. November 1995 (1995-11-30) & JP 07 171870 A (FANUC LTD), 11. Juli 1995 (1995-07-11)
- PATENT ABSTRACTS OF JAPAN Bd. 014, Nr. 311 (M-0994), 4. Juli 1990 (1990-07-04) -& JP 02 103114 A (NISSEI PLASTICS IND CO), 16. April 1990 (1990-04-16)
- SEIDENSTICKER A: "DIE SYMBIOSE MACHT'S" DER ZULIEFERMARKT, CARL HANSER VERLAG, DE, Nr. 1, 1. April 1998 (1998-04-01), Seiten 22-24, XP000750673 ISSN: 0177-1027

## Beschreibung

Die Erfindung betrifft ein Verfahren und eine Vorrichtung zur interaktiven Steuerung einer Maschine, insbesondere einer Kunststoff-Spritzgießmaschine nach dem Ober begriff der Ansprüche 1 und 10.

Ein derartiges Verfahren ist aus der EP 0 573 912 B1 bekannt. In eine Datenverarbeitungseinheit wird dabei ein Basiswissen oder ein Datensatz über die Grundregeln des Betriebs einer Spitzgießmaschine eingespielt. Die Maschine erfasst zusätzlich die vorhandene Maschinenausstattung und -umgebung wie z.B. Peripheriegeräte, und bietet dem Maschineneinsteller einen Ablaufeditor zur Erzeugung eines Maschinenablaufs an. Aufgrund der in der Datenverarbeitungseinheit vorhandenen Kenntnisse über Abläufe und Maschine wird bei der Eingabe dem Bediener stets nur eine selektierte Auswahl an Eingabemöglichkeiten visuell auf einer Bildschirmoberfläche von weiteren, in die bereits bestehenden Teile auch seitens Maschine und Spritzgießwerkzeug kompatibel einfügbaren Teile des Ablaufs zur Verfügung gestellt. Dadurch kann die Eingabe von Arbeitsabläufen vereinfacht und erleichtert werden.

Dennoch muss der Bediener wie bisher die interaktive Arbeitsablauferstellung über übliche Tastaturen eingeben, so dass trotz der selektierten Auswahl an Eingabemöglichkeiten der Bediener dahingehend geschult werden muss, welche Eingabefelder der Tastatur für eine Eingabe zu betätigen sind. Dies erfordert entsprechenden Schulungsaufwand und kann insofern auch zu Zeitveriusten im Spritzgießbetrieb führen.

In der DE 102 46 925 A1 wird für eine Spritzgießmaschine das selbsttätige Auswählen von Sicherheitsbedingungen vorgeschlagen, so dass aufgrund der ausgewählten Sicherheitsbedingen eine Auswahl von Betätigungselementen erfolgen kann. Es wird zwar eine Verknüpfung des Grundwissens des Spritzgießens mit Sicherheitsbedingungen vorgenommen, eine räumliche Begrenzung der für die Navigation vorgesehenen Eingabefelder auf der Bedienoberfläche erfolgt jedoch nur für eine erste Navigationsebene. Eine weitere Navigationsebene und ein Ablaufdiagramm sind zwar auf der Bildschirmoberfläche vorgesehen, jedoch nicht im Bereich einer feststehenden Navigationsfläche.

Die Auswertung von auf einer Spritzgießmaschine gefertigten Spritzteilen unter Setzung von Toleranzbändern ist und die Verwendung eines Joy-Sticks zur Programmauswäht ist aus der DE 35 45 360 A1, insbesondere Spalte 7, Zeilen 37 - 42 bekannt.

Ausgehend von diesem Stand der Technik liegt der vorliegenden Erfindung die Aufgabe zugrunde, ein Verfahren und eine Vorrichtung zur interaktiven Steuerung einer Spritzgießmaschine dahingehend zu verbessern, dass die Erstellung eines Ablaufs weiter erleichtert wird.

Diese Aufgabe wird durch ein Verfahren und eine Vorrichtung mit den Merkmalen der Ansprüche 1 und 10 gelöst.

Die Bedienoberfläche wird dadurch weiter bereinigt, dass dem Bediener eine ebenfalls selektierte Auswahl an von der Steuerung angebotenen Betätigungsfeldem zur Navigation zur Verfügung gestellt wird, so dass er aus dieser selektierten Auswahl die Eingabemöglichkeiten für die weiteren Teile des Arbeitsablaufs leicht auswählen kann. Es werden ihm also auf der Oberfläche dynamische Eingabefelder angeboten, die sich auch nach jeder Eingabe durch den Benutzer verändern, so dass mit fortschreitender Erstellung des Arbeitsablaufs die Eingabemöglichkeiten für den Bediener immer übersichtlicher werden. Damit wird die Eingabe für den Bediener übersichtlicher. Die Oberfläche ergänzend so aufgeteilt, dass eine erleichterte Navigation möglich ist Über wenige Zeilen oder Spalten, die als Navigationsfläche auf der Bildschirmoberfläche abgrenzbar sind, wird eine Navigation möglich, die dem Benutzer nicht nur die Eingabe erleichtert, sondern auch die Parameterbereiche deutlich werden lässt. Der Benutzer erkennt stets, wo er sich im Ablauf befindet. Dabei lässt sich die Darstellung Benutzer spezifisch ändern. Der fortgeschrittene Benutzer kann z.B. nur noch Navigationshinweise als Symbole in einer, z.B. der obersten Zeile verwenden, während Ablaufeditor und unterste Navigationsebene in den verbleibenden Zeilen dargestellt werden.

Es kann auch ein Bedienbereich mit Favoritenfeldern vorgesehen werden, die einen Direktsprung in ein bestimmtes Parameterbild ermöglichen. Dadurch ist unter Umgehung der dazu eigentlich benötigten Navigationsschritte ein Sprung jeweils in das zuletzt in der zugehörigen Parametergruppe editierte Parameterbild möglich. Damit ist z.B. vom Benutzer vorgebbar ein direktes Hin- und Herspringen zwischen Bildbereichen möglich, die zwar streng hierarchisch nicht zusammengehören, aber im Arbeitsablauf oft wechselweise editiert und/oder beobachtet werden müssen.

Weitere Vorteile ergeben sich aus den Unteransprüchen.

Im.Folgenden wird die Erfindung anhand der beigefügten Figuren näher erläutert. Es zeigen:
- Fig.1: eine schematische Darstellung der interaktiven Maschinensteuerung,
- Fig. 2: eine Darstellung der Oberfläche der Eingabeeinheit mit Navigationszeilen und Parameterbereich wie Tabellen,
- Fig. 3, 3a: eine Darstellung gemäß Fig. 2 mit einer Umschaltung zwischen dem Diagrammbereich und dem Überwachungsbereich,
- Fig. 4: eine Darstellung der drei Navigationsebenen mit einer Tabelle im Parameterbereich,
- Fig. 5: eine Darstellung gemäß Fig. 4 mit dem eingeblendeten Ablaufeditor.

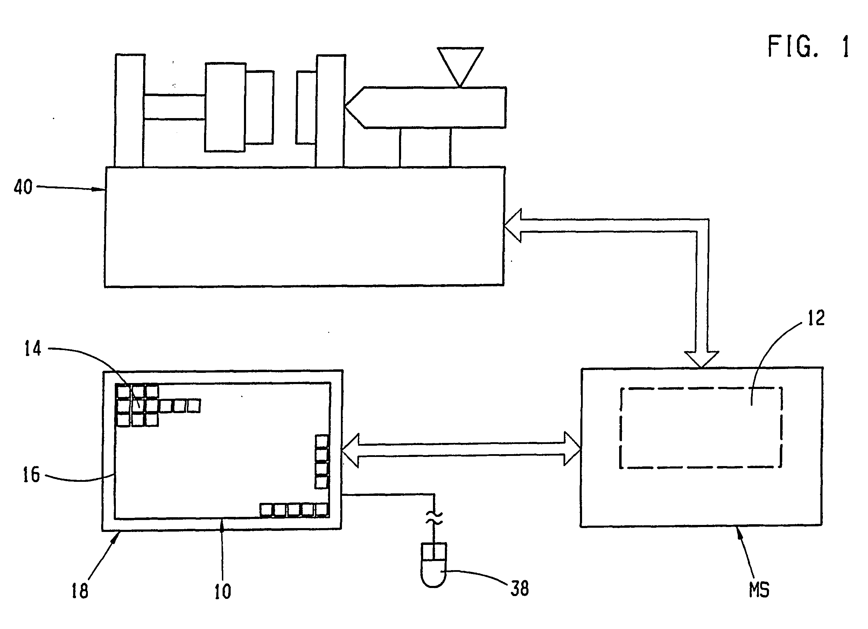

Figur 1 zeigt schematisch die Verknüpfung zwischen Eingabeeinheit 10, Maschinensteuerung MS und einer Maschine 40, die im Ausführungsbeispiel eine Spritzgießmaschine, vorzugsweise eine Kunststoff-Spritzgießmaschine zur Verarbeitung von Kunststoffen und anderen plastifizierbaren Massen ist. Ein Einsatz an anderen Maschinen ist jedoch durchaus möglich. In der Maschinensteuerung ist eine Datenverarbeitungseinheit 12 vorgesehen, in der einerseits bereits ein Datensatz über die Grundregeln des Arbeitsablaufs der Maschine eingespielt ist. Andererseits ist die Datenverarbeitungseinheit sowohl mit der Eingabeeinheit 10 als auch mit der Spritzgießmaschine verbunden, um Eingaben z.B. im Hinblick auf die Betriebsparameter zuzulassen und mit der Maschinenausrüstung und/oder Maschinenumgebung abzustimmen.

Die Eingabeeinheit 10 erlaubt über Eingabefelder 14 dem Bediener in einer den Bediener führenden Form die Eingabe der für den Arbeitsablauf der Maschine erforderlichen Betriebsparameter. Die eingegebenen Betriebsparameter werden in der Datenverarbeitungseinheit gespeichert. Aus diesen Informationen und auch aus den Informationen über Maschinenausrüstung und -umgebung werden anschließend ein oder mehrere Arbeitsabläufe gemäß den gespeicherten Betriebsparametern durchgeführt. Diese Arbeitsabläufe können auch Anfahr- und Abschlussprozesse einer Maschinenbetätigung umfassen. Es kann sich sowohl um kontinuierliche als auch diskontinuierliche Prozesse wie z.B. den Spritzzyklus einer Spritzgießmaschine oder z. B. Montagevorgänge der Peripherie handeln.

Auf Grund des Datensatzes über die Grundregeln des Arbeitsablaufs der Maschine wie z.B. über den Spritzgießprozesses und das Spritzgießen an sich wird als Ergebnis dem Bediener eine selektierte Auswahl an auf Grund der Maschinenausrüstung und -umgebung möglichen Eingabemöglichkeiten angeboten. Sobald also der Bediener einen Teil eines Arbeitsablaufes eingibt, werden ihm von da an nur noch die weiteren, in die bestehenden Teile dieses Arbeitsablaufes kompatibel einfügbaren Teile des Ablaufs zur Verfügung gestellt. Dieses Verfahren ist aus der gattungsbildenden EP 0 573 912 B1 bekannt, deren Offenbarungsgehalt insofern auch zum Gegenstand der vorliegenden Anmeldung gemacht wird.

Die Eingabeeinheit 10 weist eine Oberfläche 16 auf, auf der dem Bediener eine mit den Eingaben des Benutzers sich verändernde, selektierte Auswahl an Betätigungsfeldern wie Eingabefeldern 14 zur Verfügung gestellt wird. Diese selektierte Auswahl ist insofern bereits auf die genannten möglichen Eingabemöglichkeiten des Bedieners zur Eingabe weiterer Teile des Arbeitsablauf abgestimmt bzw. optimiert. Damit wird die Ausbildung einer dynamischen Tastatur oder dynamischer Eingabefelder möglich, die sich in Abhängigkeit der Eingaben des Benutzers kontinuierlich ändert. Gleichzeitig wird jedoch die Anzahl der Auswahlmöglichkeiten gegenüber einer vorbelegten Tastatur verringert, so dass die Bedienerführung erleichtert ist.

Eine manuelle Eingabe kann z.B. über die Oberfläche 16 selbst erfolgen, wenn diese z.B. als berührungssensitive Bedienoberfläche ausgebildet ist, auf der die Betätigungsfelder abgebildet sind. Eine Betätigung mittels eines Manipulators wie einer Maus, einem Joystick, einem Trackball oder einem anderen Bedienelement, über den die auf der Oberfläche abgebildeten Betätigungsfelder ansprechbar sind, ist ebenso möglich.

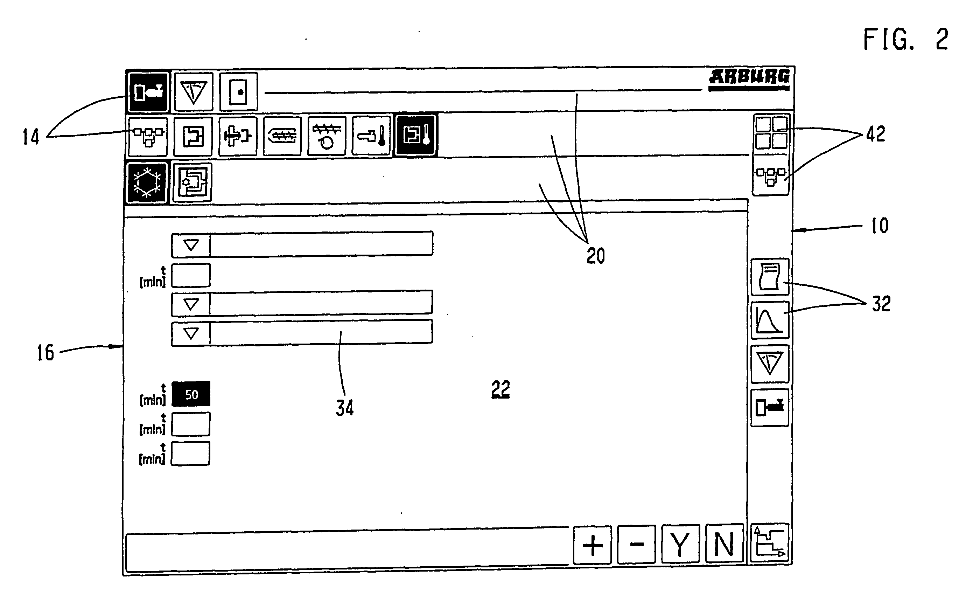

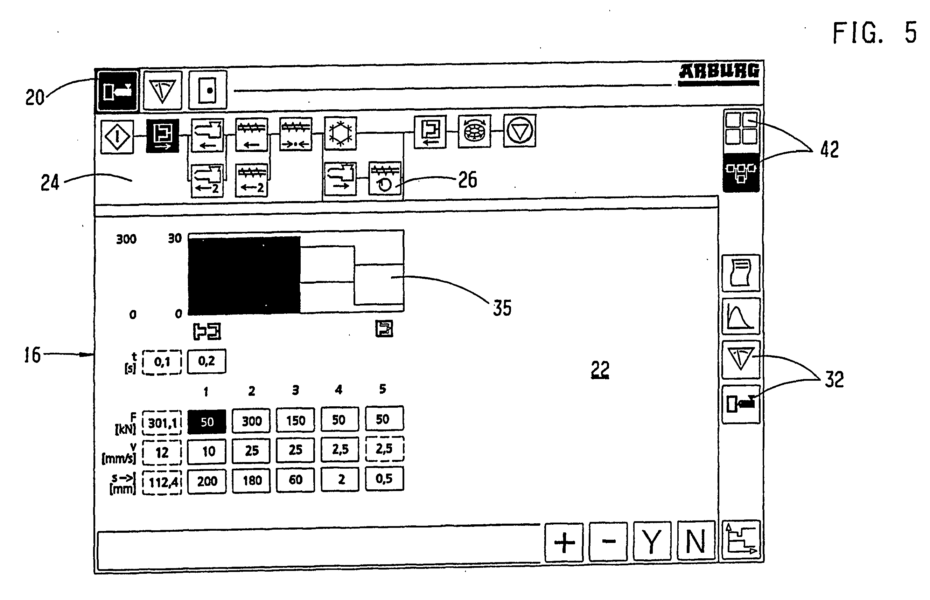

Die Oberfläche 16 der Anzeigeeinheit 18 weist in Fig. 2 mehrere Zeilen für eine hierarchische Navigationsfläche 20 auf. In den im Ausführungsbeispiel drei Zeilen können mehrere einander zugeordnete Navigationsebenen vorgesehen sein. Vorzugsweise sind die oberen beiden Zeilen Auswahlebenen, während die dritte Zeile einen Zugang zur Parameterebene z.B. für die Einstellung oder Eingabe einzelner Maschinenparameter gewährt. In dieser Navigationsfläche, die vorzugsweise eine statische Anordnung auf der Bildschirmoberfläche einnimmt, sind in der Regel drei Zeilen an Schaltflächen bzw. Eingabefelder 14 vorgesehen. Unterhalb dieser Navigationsfläche 20 ist ergänzend ein Parameterbereich 22 vorgesehen, der zur numerischen und/oder graphischen Darstellung der Betriebsparameter bestimmt ist. Bedarfsweise wird zusätzlich zur Navigationsfläche 20 und zum Parameterbereich 22 z.B. in der Navigationsfläche ein den Arbeitsablauf schematisch darstellender Ablaufeditor 24 gemäß Fig. 5 abgebildet. Über die Umschalttasten 42 kann zwischen dem Modus der Navigationszeilen gemäß Fig. 2 bis 4, bei dem der Ablaufeditor "hinter" den Navigationszeilen hinterlegt ist, und der Darstellung gemäß Fig. 5 hin und her geschaltet werden.

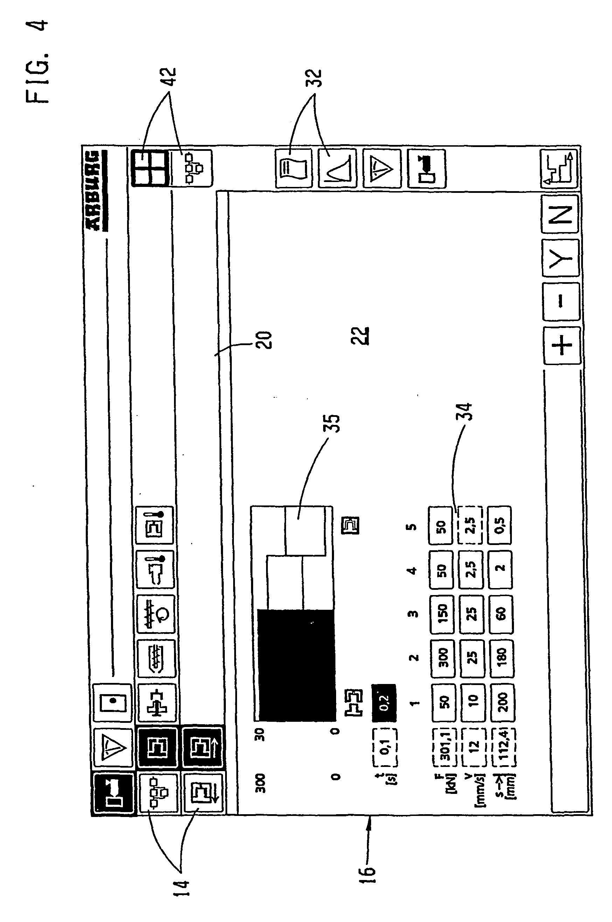

Insbesondere die Fig. 4 und 5 machen für den Bediener auf Grund der jeweils unterlegten Umschalttasten 42 deutlich, in welchem Modus sich der Bediener befindet. Grundsätzlich zeigen daher die Figuren 4 und 5 die gleiche Abbildung, die z. B. die Eingaben für das Werkzeug Schließen betreffen können. Dies kann der Bediener in beiden Fällen durch die verschiedenen Navigationsvarianten nachvollziehen. In Fig. 4 erkennt er an Hand der unterlegten Eingabefelder gemäß der obersten Zeile, dass es um den Produktionszyklus geht und kann an der zweiten und dritten Zeile ablesen, dass es um das Werkzeug und das Werkzeugschließen geht. In den Tabellen im unteren Bereich kann er die zugehörigen Werte und Rampen eingeben. In Fig. 5 erhält er zwar eine weitere oder besser gesagt andere Information vom Ablaufeditor 24, ansonsten sind die zur Verfügung stehenden Informationen identisch.

Der Bediener ist damit gemäß Fig. 2 in der Lage, drei Hierarchieebenen aufgeblättert bis zu einem konkreten Parameterbild einzusehen, wobei er auf Grund der graphisch hervorgehobenen Felder, die in den Figuren weiß auf schwarz abgebildet sind, stets genau weiß, an welcher Stelle er sich befindet. Er kann also den "Pfad" durch die im Ausführungsbeispiel drei Ebenen bis zum Parameterbild deutlich erkennen. Damit kann der Bediener sehen, wie er in das jeweilige Parameterbild gekommen ist. Ein Verzweigen in andere Bereiche der Steuerung ist in jeder der drei Ebenen möglich.

Fig. 2 zeigt z. B. die Auswahl des Kühlsystems. In der obersten Navigationszeile ist das Symbol für den Spritzgießprozess unterlegt, in der zweiten Zeile das Symbol für die Temperatureingabe und in der dritten Zeile das Symbol für die Kühlung. In den darunter liegenden Tabellen können einerseits Vorgaben erfolgen, die z. B. das Einschalten des Kühlwasserhauptventils, die Zuordnung der Ventile Kühlsystem oder auch Zeiteingaben wie die Abschaltverzögerung des Kühlsystems oder andere spezifische Parameter betreffen.

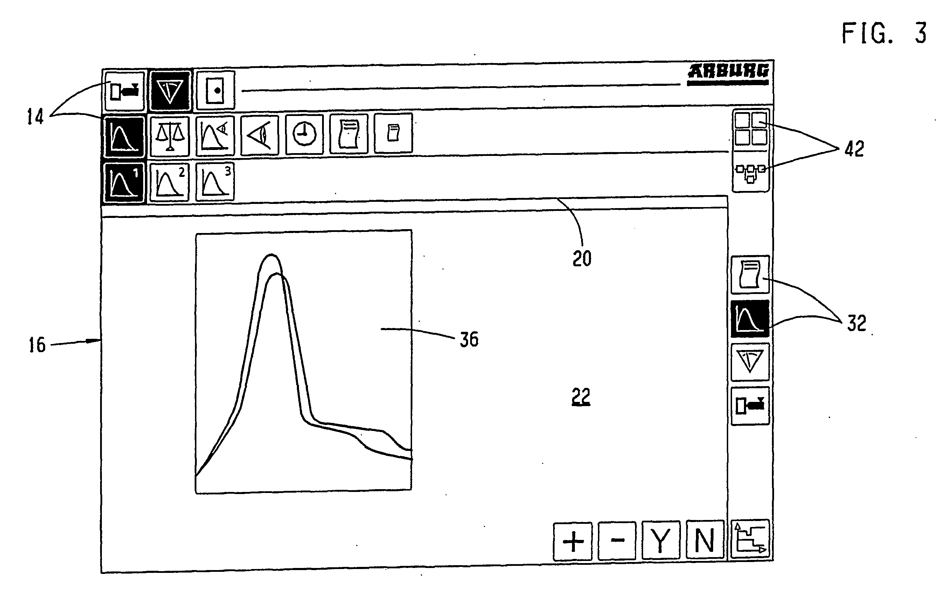

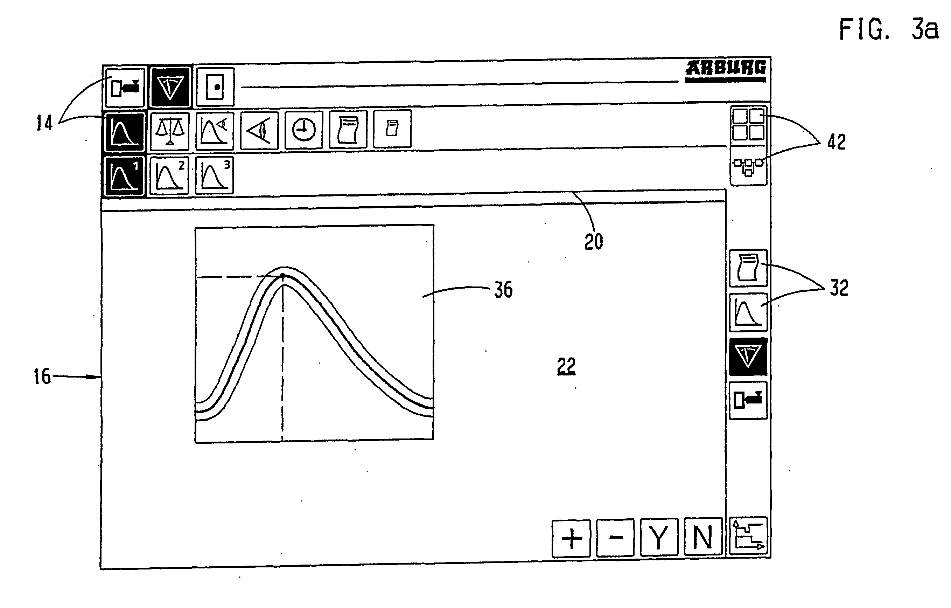

Die Bildinhalte werden tabellarisch und/oder graphisch dargestellt, wie dies in Fig. 2 bis 5 erläutert ist. Das Antippen eines Ablaufsymbols 26 verzweigt dabei in der untersten Navigationsebene in die Gruppe der zur gewählten Achse gehörenden Parameterbilder. Vorzugsweise wird auf Grund von Tabellen für die Eingabeparameter eine nicht editierbare graphische Darstellung erzeugt, die insofern bereits die umgesetzten Sollwerte beinhaltet also z.B. eine Graphik, in die bereits interne Zeitverzögerungen, Rampen usw. der Maschine eingerechnet sind. Es ist jedoch ebenfalls möglich, auf der Oberfläche 16 eine editierbare Eingabegrafik 36 vorzusehen, an der der Bediener durch Berührung oder Manipulation Änderungen durchführen und begreifen kann. Fig. 3 zeigt z. B. die Eingabe von Überwachungsparametern als unterlegtes Eingabefeld in der obersten Zeile. In der zweiten Zeile werden dann die zugehörigen Untergruppen ausgewählt, wobei hier resultierend z. B. drei Parameterbilder vorgegeben sein können. Dieses Parameterbild kann gemäß Fig. 3a mit den entsprechenden Toleranzbändern versehen werden.

Ergänzend kann gemäß Fig. 2 bis 5 ein Bedienbereich vorgesehen werden, auf dem Felder in Art von Favoritenfeldern 32 vom Hersteller oder Benutzer vorgegeben bzw. vorgebbar sind. Sie ermöglichen jeweils einen Direktsprung in ein definiertes Parameterbild der Steuerungsoberfläche unter Umgehung der dazu eigentlich benötigten Navigationsschritte der bisher definierten hierarchischen oder ablaufgebundenen Navigationsvarianten. Die Steuerung zeigt allerdings nicht immer dasselbe Parameterbild mit Aktivierung eines bestimmten Favoritenfelds 32 an, sondern es wird jeweils das zuletzt in der zugehörigen Parametergruppe editierte Parameterbild gezeigt. Mehrere dieser Favoritenfelder 32 ermöglichen damit im Zusammenwirken ein direktes Hin- und Herspringen zwischen Bildbereichen, die zwar streng hierarchisch nicht zusammen gehören, aber im Arbeitsablauf oft wechselweise editiert oder beobachtet werden müssen. Diese Favoritenfelder sind in Fig. 2 bis 5 am rechten Rand dargestellt und erlauben direkt einen Zugriff auf einen Bereich bzw. ein Parameterbild aus dem Bereich Produktion, Istwertaufzeichnung, Überwachung usw. Insbesondere die Fig. 3, 3a zeigen ein derartiges Hin- und Herschalten zwischen dem Diagramm eines Ablaufs in Fig. 3 und dem zugehörigen, üblicherweise jedoch nicht unmittelbar verknüpften Überwachungsbereich zur Eingabe und/oder Darstellung der Toleranzbandbereiche in Fig. 3a.

Die Eingabegraphik 36 kann so ausgebildet werden, dass sie entweder über die vorausgegangenen Tabellen 34 oder über die Graphik selbst entweder unmittelbar z.B. über einen Touchscreen oder mittelbar mittels eines Manipulators verändert werden kann. Die Tabellen werden vorzugsweise in Maschinenansicht dargestellt, d.h. auch die Eingabe in die Tabellen erfolgt jeweils für verschiedene Bewegungsrichtungen der Achsen immer in Bewegungsrichtung, d.h. nicht immer im zeitlichen Ablauf, also von links nach rechts. Bei einer Spritzgießmaschine könnte dies z.B. die Schließ- und anschließende Öffnungsbewegung eines Spritzgießwerkzeuges sein.

Mit dieser Navigationsvariante können nur die Parameterbildseiten annavigiert werden, die sich auf eine Achse der Spritzgießmaschine beziehen, die also ablaufgebunden sind. Andere Parameterseiten, die nicht direkt achsenbezogen sind, können so nicht erreicht werden. Unter dem Begriff "Achse" wird dabei ein bestimmter Antriebsstrang der Maschine verstanden, wie z.B. bei einer Spritzgießmaschine die Düsenfahreinheit, die Einspritzeinheit oder die Formschließeinheit.

Alternativ besteht gemäß Fig. 5 die Möglichkeit, in der Navigation die zeilenweise Darstellung so zu nutzen, dass in einer, z.B. in der obersten Zeile lediglich noch ein Symbol für die höheren Navigationsebenen verwendet wird. Die weiteren Zeilen können zur Navigation über den Maschinenablauf genutzt werden.

Im Alarmfall werden die vom Alarm betroffenen Symbole des Arbeitsablaufs entsprechend gekennzeichnet. Ein Antippen der so gekennzeichneten Alarmsymbole führt zur Darstellung durch Direktsprung in den betroffenen Parameterbereich. Dadurch ist eine schnelle Benutzerführung im Alarmfall möglich.

Alternativ können die zeilenweisen Darstellungen auch spaltenweise und die spaltenweisen Darstellungen auch zeilenweise vorgenommen werden. Ziel ist eine möglichst bedienerfreundliche Bedienerführung und Bedienerleichterung unter Optimierung der Einstellzeiten für eine Maschine. Bevorzugter Anwendungsbereich ist eine Kunststoff-Spritzgießmaschine. Schließlich kann das gesamte Verfahren auch auf einem Datenträger gespeichert werden.

### Bezugszeichenliste

- 10: Eingabeeinheit
- 12: Datenverarbeitungseinheit
- 14: Eingabefeld
- 16: berührungssensitive Fläche
- 18: Anzeigeeinheit
- 20: Navigationsfläche
- 22: Parameterbereich
- 24: Ablaufeditor
- 26: Ablaufsymbol
- 32: Favoritenfeld
- 34: Tabelle
- 35: Nichteditierbare graphische Darstellung
- 36: Eingabegrafik
- 38: Manipulator
- 40: Maschine
- 42: Umschalttasten
- MS: Maschinensteuerung

## Patentansprüche

1. Verfahren zur interaktiven Steuerung einer insbesondere zyklisch arbeitenden Kunststoff-Spritzgießmaschine, bei dem in einer den Bediener führenden Form für den Arbeitsablauf einer Maschine erforderliche Betriebsparameter über eine mit Betätigungsfeldem versehene Eingabeeinheit (10) in eine diese Betriebsparameter speichernde Datenverarbeitungseinheit (12) eingegeben werden und anschließend ein oder mehrere Arbeitsabläufe gemäß den gespeicherten Betriebsparametern durchgeführt werden, wobei in die Datenverarbeitungseinheit (12) ein Datensatz über die Grundregeln des Arbeitsablaufs der Maschine eingespielt wird und unter Einsatz des Datensatzes als Ergebnis dem Bediener eine selektierte Auswahl an auf Grund der Maschinenausrüstung und -umgebung möglichen Eingabemöglichkeiten von weiteren, in die bestehenden Teile des Arbeitsablaufs kompatibel einfügbaren Teilen des Arbeitsablaufs auf einer Oberfläche (16) visualisiert zur Verfügung gestellt wird, wobei die Eingabeeinheit (10) auf der Oberfläche (16) dem Bediener zur manuellen Eingabe und/oder zur Eingabe mittels eines Manipulators (38) eine den weiteren Teilen des Ablaufs entsprechende, selektierte Auswahl an Betätigungsfeldem zur Navigation auf einer auf der Oberfläche (16) statisch angeordnete Navigationsfläche (20) zur Verfügung stellt,
**dadurch gekennzeichnet, dass** die wenigstens drei Zeilen oder wenigstens drei Spalten von Betätigungs- oder Eingabefeldern umfassende, von Zeile zu Zeile bzw. Spalte zu Spalte hierarchische Navigationsfläche (20) mit mehreren einander zugeordneten Navigationsebenen auf der Oberfläche dargestellt wird.

2. Verfahren nach einem Anspruch 1, **dadurch gekennzeichnet, dass** die Betätigungsfelder als Eingabefelder (14) abgebildet werden und/oder dass die hierarchische Navigationsfläche (20) mit drei Zeilen dargestellt wird.

3. Verfahren nach Anspruch 1 oder 2, **dadurch gekennzeichnet, dass** auf der Oberfläche (16) ein Parameterbereich (22) zur numerischen und/oder graphischen Darstellung von Betriebsparametern dargestellt wird und/oder zusätzlich zu den Navigationsebenen ein den Arbeitsablauf schematisch darstellender Ablaufeditor (24) dargestellt wird.

4. Verfahren nach einem der vorhergehenden Ansprüche, **dadurch gekennzeichnet, dass** zu einem Ablaufsymbol (26) die Parameterbilder auf der jeweiligen Navigationsebene angezeigt werden, wenn das Ablaufsymbol (26) angetippt wird.

5. Verfahren nach einem der vorhergehenden Ansprüche, **dadurch gekennzeichnet, dass** bei wenigstens drei Navigationsebenen die obersten Navigationsebenen symbolisch in einer Zeile dargestellt werden, während die unterste Navigationsebene vollständig in den weiteren Zeilen dargestellt wird.

6. Verfahren nach einem der vorhergehenden Ansprüche, **dadurch gekennzeichnet, dass** im Alarmfall die vom Alarm betroffenen Symbole (26) des Arbeitsablaufs **gekennzeichnet** werden und dass ein Antippen zur Darstellung des betroffenen Parameterbereichs führt.

7. Verfahren nach einem der vorhergehenden Ansprüche, **dadurch gekennzeichnet, dass** auf der Oberfläche (16) Favoritenfelder (32) dem Benutzer vorgegeben oder vorgebbar sind, die bei Betätigung zu einem von der Navigation unabhängigen Sprung zu einer vorgegebenen oder vorgebbaren Parametergruppe führen, wobei vorzugsweise bei Betätigung des Favoritenfelds (32) in der dazugehörigen Parametergruppe das zuletzt editierte Parameterbild angezeigt wird.

8. Verfahren nach einem der vorhergehenden Ansprüche, **dadurch gekennzeichnet, dass** auf der Oberfläche (16) Tabellen (34) zur Eingabe von Betriebsparametern dargestellt werden und dass daraus eine vorzugsweise nicht editierbare graphische Darstellung (35) der daraus umgesetzten Sollwerte erzeugt wird, wobei vorzugsweise die Darstellung der Eingabe der Betriebsparameter für die verschiedenen Bewegungsrichtungen der Achsen in Bewegungsrichtung der Achsen erfolgt.

9. Verfahren nach einem der vorhergehenden Ansprüche, **dadurch gekennzeichnet, dass** auf der Oberfläche (16) eine editierbare Eingabegraphik (36) dargestellt wird.

10. Vorrichtung zur interaktiven Steuerung einer insbesondere zyklisch arbeitenden Kunststoff-Spritzgießmaschine, mit
- einer Datenverarbeitungseinheit (12),
- einer Eingabeeinheit (10) mit auf einer Oberfläche (16) zur manuellen Eingabe und/oder zur Eingabe mittels eines Manipulators (38) angeordneten Feldern, durch die in einer den Bediener führenden Form die für den Arbeitsablauf der Maschine erforderlichen Betriebsparameter in die die Betriebsparameter speichernde Datenverarbeitungseinheit (12) eingebbar sind zur nachfolgenden Durchführung ein oder mehrerer Arbeitsabläufe gemäß den gespeicherten Betriebsparametern, wobei die Felder Betätigungsfelder zur Navigation auf einer auf der Oberfläche (16) statisch angeordnete Navigationsfläche (20) umfassen,
- einem in die Datenverarbeitungseinheit (12) eingespielten Datensatz über die Grundregeln des Arbeitsablaufs der Maschine,
- einer unter Einsatz des Datensatzes als Ergebnis dem Bediener auf der Oberfläche (16) visualisiert angebotenen, selektierten Auswahl an auf Grund der Maschinenausrüstung und -umgebung möglichen Eingabemöglichkeiten von weiteren, in die bestehenden Teile des Arbeitsablaufs kompatibel einfügbaren Teilen des Arbeitsablaufs,
**dadurch gekennzeichnet, dass** die wenigstens drei Zeilen oder wenigstens drei Spalten von Betätigungs- oder Eingabefeldern umfassende, von Zeile zu Zeile bzw. Spalte zu Spalte hierarchische Navigationsfläche (20) mehrere einander zugeordnete Navigationsebenen aufweist.

11. Vorrichtung nach Anspruch 10, **dadurch gekennzeichnet, dass** die Betätigungsfelder als Eingabefelder (14) abgebildet sind und/oder dass die hierarchische Navigationsfläche (20) drei Zeilen aufweist.

12. Vorrichtung nach Anspruch 10 oder 11, **dadurch gekennzeichnet, dass** auf der Oberfläche (16) ein Parameterbereich (22) zur numerischen und/oder graphischen Darstellung der Betriebsparameter vorgesehen ist und/oder zusätzlich zu den Navigationsebenen ein den Arbeitsablauf schematisch darstellender Ablaufeditor (24) vorgesehen ist.

13. Vorrichtung nach einem der Ansprüche 10 bis 12, **dadurch gekennzeichnet, dass** bei wenigstens drei Navigationsebenen die Symbole für die obersten Navigationsebenen in einer Zeile vorgesehen sind, während die Elemente der untersten Navigationsebene soweit als erforderlich vollständig in den weiteren Zeilen vorgesehen sind.

14. Vorrichtung nach einem der vorhergehenden Ansprüche 10 bis 13, **dadurch gekennzeichnet, dass** Kennzeichnungsmittel zur Kennzeichnung von von einem Alarm betroffenen Symbolen (26) des Arbeitsablaufs vorgesehen sind.

15. Vorrichtung nach einem der Ansprüche 10 bis 14, **dadurch gekennzeichnet, dass** vorgegebene oder vom Benutzer vorgebbare Favoritenfelder (32) auf der Oberfläche (16) vorgesehen sind, die als Sprungtasten für einen von der Navigation unabhängigen Sprung zu einer vorgegebenen oder vorgebbaren Parametergruppe vorgesehen sind, wobei vorzugsweise eine Verknüpfung der Sprungtasten mit dem zuletzt editierten Parameterbild innerhalb der zugehörigen Parametergruppe vorgesehen ist.

16. Vorrichtung nach einem der Ansprüche 10 bis 15, **dadurch gekennzeichnet, dass** auf der Oberfläche (16) eine nicht editierbare graphische Darstellung der aus den Eingabeparametern umgesetzten Sollwerte und/oder eine editierbare Eingabegrafik (36) vorgesehen ist.

17. Datenträger mit einem Programm zur Durchführung des Verfahrens nach einem der Ansprüche 1 bis 9.

## Claims

1. Method for the interactive control of an especially cyclically operating plastics material injection moulding machine, where, via an input unit (10), which is provided with actuating fields, operating parameters necessary for the working sequence of a machine are input, in a form which prompts the operator, into a data processing unit (12) which stores these operating parameters, and subsequently one or more operating sequences are carried out in accordance with the stored operating parameters, wherein a data set covering the basic rules of the working sequence of the machine is recorded in the data processing unit (12) and, by using the data set, as a result, the operator is provided on a surface (16) with visualisation of a selected choice of input possibilities, based on the machine configuration and the machine environment, for additional parts of the working sequence that can be added in a compatible manner into the existing parts of the working sequence, wherein for manual input and/or for input by means of a manipulator (38), the input unit (10) makes available to the operator on the surface (16) a selected choice of actuating fields corresponding to the additional parts of the sequence for navigation on a navigation surface (20) statically arranged on the surface (16),
**characterised in that** navigation surface (20) comprising at least three lines or at least three columns and being hierarchical from line to line or column to column, is represented on the surface (16) with a plurality of navigation levels associated with one another.

2. Method according claim 1, **characterised in that** the actuating fields are imaged as input fields (14) and/or that the hierarchical navigation surface (20) is represented with three lines.

3. Method according to claim 1 or 2, **characterised in that** a parameter region (22) is represented on the surface (16) for the numeric and/or graphic representation of operating parameters and/or that in addition to the navigation levels, a sequence editor (24), which represents the sequence in a schematic manner, is represented on the surface (16).

4. Method according to one of the previous claims, **characterised in that** when a sequence symbol (26) is tapped, the parameter images associated with the sequence symbol (26) are displayed on the respective navigation level.

5. Method according to one of the previous claims, **characterised in that** at least three navigation levels are represented on the surface (16), and **in that** the top navigation levels are represented symbolically in one line, whilst the bottom navigation level is represented completely in the additional lines.

6. Method according to one of the previous claims, **characterised in that** in the event of an alarm, the symbols (26) of the working sequence relating to the alarm are identified and **in that** tapping leads to the representation of the relevant parameter region.

7. Method according to one of the previous claims, **characterised in that** favourite fields (32) are preset or are presettable on the surface (16) by the user and when actuated these lead to a jump, independent of the navigation, to a preset or presettable parameter group, wherein preferably, when the favourite field (32) is actuated, the parameter image edited last in the associated parameter group is displayed.

8. Method according to one of the previous claims, **characterised in that** tables (34) are represented on the surface (16) for the input of operating parameters and **in that**, from these, a preferably non-editable graphic representation of the required values converted therefrom is generated, wherein preferably the representation of the input of the operating parameters for the various directions of displacement of the axes is effected in the direction of displacement of the axes.

9. Method according to one of the previous claims, **characterised in that** an editable input diagram (36) is represented on the surface (16).

10. Apparatus for the interactive control of an especially cyclically operating plastics material injection moulding machine, comprising
- a data processing unit (12),
- an input unit (10) with fields provided on a surface (16) for the manual input and/or for the input by means of a manipulator (38), by means of which, in a form which prompts the operator, the operating parameters necessary for the operating sequence of the machine can be input into the data processing unit (12) which stores the operating parameters, wherein subsequently one or more operating sequences are carried out in accordance with the stored operating parameters, wherein the fields comprise actuating fields on a navigation surface (20) arranged on the surface (16),
- a data set covering the basic rules of the operating sequence of the machine, said data set being recorded in the data processing unit (12),
- in using the data set and as a result, a selected choice, offered to the operator displayed on a the surface (16), of possible input possibilities, based on the machine configuration and machine environment, for additional parts of the operating sequence that can be added in a compatible manner into the existing parts of the operating sequence,
**characterised in that** navigation surface (20) comprising at least three lines or at least three columns and being hierarchical from line to line or from column to column comprises a plurality of navigation levels, which are associated with one another.

11. Apparatus according to claim 10, **characterised in that** the actuating fields are imaged as input fields (14) and/or that the hierarchical navigation surface (20) includes three lines.

12. Apparatus according to claim 10 or 11, **characterised in that** a parameter region (22) is provided on the surface (16) for the numeric and/or graphic representation of the operating parameters and/or that in addition to the navigation levels, a sequence editor (24) representing the operating sequence in a schematic manner is provided on the surface (16).

13. Apparatus according to one of claims 10 to 12, **characterised in that** at least three navigation levels are provided and **in that** the symbols for the top navigation levels are provided in one line, whilst the elements of the bottom navigation level where necessary are provided completely in the additional lines.

14. Apparatus according to one of the previous claims 10 to 13, **characterised in that** identification means are provided for identifying symbols (26) of the operating sequence related to an alarm.

15. Apparatus according to one of claims 10 to 14, **characterised in that** preset favourite fields (32) or favourite fields (32) that are presettable by the user are provided on the surface (16), said fields being provided as jump keys for a jump independent of the navigation to a preset or presettable parameter group, wherein preferably a linking of the jump keys with the parameter image last edited within the associated parameter group is provided.

16. Apparatus according to one of claims 10 to 15, **characterised in that** a non-editable graphic representation of the required values converted from the input parameters and/or an editable input diagram (36) is provided on the surface (16).

17. Data carrier comprising a program for the accomplishment of the method according to one of claims 1 to 9.

## Revendications

1. Procédé de commande interactive d'une machine de moulage par injection de matières plastiques, travaillant en particulier de manière cyclique, dans lequel des paramètres de service requis pour le déroulement de travail d'une machine sont saisis, sous une forme guidant l'opérateur, via une unité de saisie (10) pourvue de champs d'actionnement, introduits dans une unité de traitement de données (12) qui sauvegarde ces paramètres et service et, ensuite, un ou plusieurs déroulements de travail sont exécutés selon les paramètres de service sauvegardés, un jeu de données concernant les règles de base du déroulement de la machine étant introduit dans l'unité de traitement de données (12) et, moyennant la mise en oeuvre du jeu de données, un choix sélectionné de possibilités de saisie, possibles en raison de l'équipement et de l'environnement de la machine, d'autres parties du déroulement de travail insérables de manière compatible dans les parties existantes du déroulement du travail, étant mis à la disposition de l'opérateur en tant que résultat, de manière visualisée sur une surface (16), l'unité de saisie (10) mettant à la disposition de l'opérateur, sur la surface (16), aux fins de la saisie manuelle et/ou de la saisie au moyen d'un manipulateur (38), un choix sélectionné, correspondant aux autres parties du déroulement, de champs d'actionnement pour la navigation sur une surface de navigation (20) à agencement statique sur la surface (16),
**caractérisé en ce que** la surface de navigation (20), hiérarchique de ligne en ligne respectivement de colonne en colonne, comprenant au moins trois lignes ou au moins trois colonnes de champs d'actionnement ou de saisie, est représentée sur la surface avec plusieurs niveaux de navigation associés entre eux.

2. Procédé selon la revendication 1, **caractérisé en ce que** les champs d'actionnement sont représentés sous la forme de champs de saisie (14) et/ou la surface de navigation hiérarchique (20) est représentée avec trois lignes.

3. Procédé selon la revendication 1 ou 2, **caractérisé en ce qu'**est représentée, sur la surface (16), une zone de paramètres (22) pour la représentation numérique et/ou graphique de paramètres de service et/ou, en plus des niveaux de navigation, un éditeur de déroulement (24) représentant schématiquement le déroulement du travail est représenté.

4. Procédé selon l'une des revendications précédentes, **caractérisé en ce que**, pour un symbole de déroulement (26), les images paramétriques sont affichées sur le niveau de navigation respectif si l'on touche le symbole de déroulement (26).

5. Procédé selon l'une des revendications précédentes, **caractérisé en ce que**, étant donné au moins trois niveaux de navigation, les niveaux de navigation supérieurs sont représentés symboliquement dans une ligne tandis que le niveau de navigation inférieur est représenté entièrement dans les autres lignes.

6. Procédé selon l'une des revendications précédentes, **caractérisé en ce que**, en cas d'alarme, les symboles (26) du déroulement du travail concernés par l'alarme sont marqués et **en ce que**, en touchant, tapant ou cliquant, on obtient la représentation de la zone de paramètres concernée.

7. Procédé selon l'une des revendications précédentes, **caractérisé en ce que**, sur la surface (16), des champs de préférences (32) sont prédéterminés ou prédéterminables pour l'utilisateur, lesquels, en cas d'actionnement, entraînent un saut, indépendant de la navigation, à un groupe de paramètres prédéterminé ou prédéterminable, l'image paramétrique éditée en dernier lieu étant préférentiellement affichée en cas d'actionnement du champ de préférences (32) dans le groupe de paramètres associé.

8. Procédé selon l'une des revendications précédentes, **caractérisé en ce que** sont représentées, sur la surface (16), des tables (34) pour la saisie de paramètres et **en ce qu'**est générée, sur cette base, une représentation graphique (35) de préférence non éditable des valeurs de consigne converties à partir de cela, la représentation de la saisie des paramètres de service se faisant préférentiellement, pour les différents sens de mouvement des axes, dans le sens du mouvement des axes.

9. Procédé selon l'une des revendications précédentes, **caractérisé en ce qu'**un graphique de saisie éditable (36) est représenté sur la surface (16).

10. Dispositif de commande interactive d'une machine de moulage par injection de matières plastiques, travaillant en particulier de manière cyclique, comprenant
- une unité de traitement de données (12),
- une unité de saisie (10) avec des champs agencés sur une surface (16) aux fins de la saisie manuelle et/ou de la saisie au moyen d'un manipulateur (38), lesquels permettent la saisie des paramètres de service requis pour le déroulement du travail de la machine, sous une forme qui guide l'opérateur, dans l'unité de traitement de données (12) qui sauvegarde les paramètres de service, aux fins de l'exécution subséquente d'un ou de plusieurs déroulements de travail selon les paramètres de service sauvegardés, les champs comprenant des champs d'actionnement pour la navigation sur une surface de navigation (20) à agencement statique sur la surface (16),
- un jeu de données concernant les règles de base du déroulement de la machine, introduit dans l'unité de traitement de données (12),
- un choix sélectionné, offert, moyennant la mise en oeuvre du jeu de données, en tant que résultat à l'opérateur sous forme visualisée sur la surface (16), de possibilités de saisie, possibles en raison de l'équipement et de l'environnement de la machine, d'autres parties du déroulement de travail insérables de manière compatible dans les parties existantes du déroulement du travail,
**caractérisé en ce que** la surface de navigation (20), hiérarchique de ligne en ligne respectivement de colonne en colonne, comprenant au moins trois lignes ou au moins trois colonnes de champs d'actionnement ou de saisie, présente plusieurs niveaux de navigation associés entre eux.

11. Dispositif selon la revendication 10, **caractérisé en ce que** les champs d'actionnement sont représentés sous la forme de champs de saisie (14) et/ou la surface de navigation hiérarchique (20) comporte trois lignes.

12. Dispositif selon la revendication 10 ou 11, **caractérisé en ce qu'**est prévue, sur la surface (16), une zone de paramètres (22) pour la représentation numérique et/ou graphique de paramètres de service et/ou, en plus des niveaux de navigation, un éditeur de déroulement (24) représentant schématiquement le déroulement du travail est prévu.

13. Dispositif selon l'une des revendications 10 à 12, **caractérisé en ce que**, étant donné au moins trois niveaux de navigation, les symboles pour les niveaux de navigation supérieurs sont représentés dans une ligne tandis que les éléments du niveau de navigation inférieur sont représentés, dans la mesure où cela est nécessaire, entièrement dans les autres lignes.

14. Dispositif selon l'une des revendications 10 à 13, **caractérisé en ce que** sont prévus des moyens de marquage pour marquer des symboles (26) du déroulement du travail concernés par une alarme.

15. Dispositif selon l'une des revendications 10 à 14, **caractérisé en ce que** sont prévus, sur la surface (16), des champs de préférences (32) prédéterminés ou prédéterminables par l'utilisateur, lesquels sont prévus en tant que touches de saut pour un saut, indépendant de la navigation, à un groupe de paramètres prédéterminé ou prédéterminable, un enchaînement des touches de saut étant de préférence prévu, au sein du groupe de paramètres associé, avec l'image paramétrique éditée en dernier lieu.

16. Dispositif selon l'une des revendications 10 à 15, **caractérisé en ce que** sont prévus, sur la surface (16), une représentation graphique non éditable des valeurs de consigne converties à partir des paramètres de saisie et/ou un graphique de saisie (36) éditable.

17. Support de données avec un programme permettant l'exécution du procédé selon l'une des revendications 1 à 9.
